# FASCICULE DE BREVET EUROPEEN

(11) **EP 4 016 357 B1**
(45) Date de publication et mention de la délivrance du brevet: **28.08.2024**
(21) Numéro de dépôt: 21306710.1
(22) Date de dépôt: 06.12.2021
(51) Int. Cl.: G06F 21/75, G06F 21/79

(54) **PROCÉDÉ DE DÉTECTION D'INGÉNIERIE INVERSÉE SUR UNE UNITÉ DE TRAITEMENT UTILISANT UN POINTEUR D'INSTRUCTION ET CIRCUIT INTÉGRÉ CORRESPONDANT**
VERFAHREN ZUR ERKENNUNG VON REVERSE ENGINEERING AUF EINER VERARBEITUNGSEINHEIT UNTER VERWENDUNG EINES BEFEHLSZEIGERS UND ENTSPRECHENDE INTEGRIERTE SCHALTUNG
METHOD FOR DETECTING REVERSE ENGINEERING ON A PROCESSING UNIT USING AN INSTRUCTION POINTER AND CORRESPONDING INTEGRATED CIRCUIT

(30) Priorité: 18.12.2020 FR 2013623
(43) Date de publication de la demande: 22.06.2022
(73) Titulaire: STMicroelectronics (ALPS) SAS, 38000 Grenoble (FR); STMICROELECTRONICS (GRENOBLE 2) SAS, 38000 Grenoble (FR)
(72) Inventeur: MOISUC, Diana, 38120 Saint Egreve (FR); EICHWALD, Christophe, 38360 Sassenage (FR)
(74) Mandataire: Casalonga

(56) Documents cités:
- EP-A1- 3 438 865
- US-A1- 2015 339 480
- US-A1- 2019 166 158

## Description

La présente invention concerne le domaine de la microélectronique, et en particulier les systèmes de protection contre l'ingénierie inversée.

Classiquement, un procédé d'ingénierie inversée est utilisé pour étudier et éventuellement pour cloner un comportement d'un microcontrôleur. Un microcontrôleur comprend typiquement au moins un processeur et une mémoire reliés par l'intermédiaire d'un bus de données.

Le procédé d'ingénierie inversée utilisé comprend une attaque invasive du microcontrôleur pour forcer le processeur à accéder de manière linéaire à des informations contenues dans la mémoire. En particulier, le processeur est forcé dans un mode de lecture linéaire. Dans ce cas, un logiciel embarqué dans la mémoire ne s'exécute plus correctement, des instructions de branchement ne sont plus exécutées, et par conséquent le processeur lit séquentiellement, c'est-à-dire l'une après l'autre, l'ensemble des instructions contenues dans la mémoire.

Un exemple d'un tel procédé d'ingénierie inversée comprend une phase d'analyse matérielle, utilisant des techniques de déstratification et de microscopie avancée pour identifier les éléments matériels véhiculant des informations secrètes. La phase d'analyse matérielle permet d'identifier la logique contrôlant le calcul de récupération d'adresse (usuellement nommée « fetch address » en anglais).

Dans le procédé d'ingénierie inversée, une phase d'extraction de données utilisant des faisceaux d'ions focalisés « FIB » (pour « Focalised Ion Beam » usuellement en anglais) ou bien des techniques d'injection de fautes permet de forcer le circuit logique de récupération d'adresses dans un mode d'exécution linéaire, c'est-à-dire un mode de fonctionnement dans lequel le processeur exécute uniquement des instructions de branchement dont le mode d'adressage comprend une incrémentation par rapport à l'adresse en cours de lecture dans le processeur.

En conséquence, le processeur va lire séquentiellement l'ensemble du contenu de la mémoire, et des technologies de sondes microscopiques permettent d'extraire le contenu lu par le processeur. Par exemple, l'extraction des données peut être faite au niveau d'un registre d'instruction, stockant temporairement chaque instruction en provenance de la mémoire, avant d'être exécutée.

À partir de contenus secrets ainsi extraits par le procédé d'ingénierie inversée, il est possible de reconstruire le logiciel embarqué du microcontrôleur et de réaliser des produits clonés.

Les solutions classiques utilisant des couches matérielles de protection génériques, ou bien des techniques de fonctionnement croisé de deux processeurs, sont connues et des parades permettant de les contourner ont été développées. Les documents EP3438865A1 et US2015/339480A1 constituent des documents d'art antérieur pertinents.

Il existe donc un besoin de détecter les tentatives d'extraction d'un code source contenu dans une mémoire. De plus, il existe un besoin de réagir face à de telles tentatives. Par ailleurs, il existe également un besoin de rendre les solutions de détection et de réaction difficiles à détecter afin de compliquer le développement d'éventuelles parades.

La présente invention est définie par les revendications indépendantes ci-jointes.

Selon un aspect, il est proposé un procédé de détection d'extraction linéaire d'information dans une unité de traitement utilisant un pointeur d'instruction, le procédé comprenant une surveillance des valeurs du pointeur d'instruction, une détermination d'un nombre d'incrémentations consécutives d'une quantité constante sur les valeurs du pointeur d'instruction, et une génération d'un signal de détection si ledit nombre est supérieur ou égal à un seuil de détection.

Par « surveillance des valeurs du pointeur d'instruction », on entend par exemple une lecture systématique et régulière des valeurs du pointeur d'instruction, n'ayant pas d'incidence sur l'usage classique du pointeur d'instruction en tant qu'indicateur d'adresse mémoire.

Par « incrémentation », on entend par exemple une modification de la valeur du pointeur d'instruction correspondant à l'ajout d'une quantité entière positive (pouvant être égale à 1 ou supérieure à 1), à la valeur précédente du pointeur d'instruction. En conséquence, on entend par « incrémentations consécutives d'une quantité constante » des modifications consécutives de la valeur du pointeur d'instruction correspondant chacune à l'ajout de la même quantité entière positive respectivement à chaque valeur précédente du pointeur d'instruction.

Or, une étape d'extraction linéaire de code d'un procédé d'ingénierie inversé produit un nombre d'incrémentations consécutives d'une quantité constante sur les valeurs du pointeur d'instruction pouvant être plus grande que la normale, autrement dit plus grande que le seuil de détection choisi à cet égard.

Ainsi, la surveillance des valeurs du pointeur d'instruction et la génération du signal de détection selon cet aspect permettent de détecter et de signaler qu'un procédé d'ingénierie inversée, en particulier une étape d'extraction linéaire de code, est en cours sur l'unité de traitement.

Par ailleurs, la valeur du pointeur d'instruction est classiquement stockée dans un registre situé à l'intérieur de l'unité de traitement.

Ainsi le procédé selon cet aspect peut être mis en oeuvre par des moyens intégrés directement dans l'unité de traitement et difficiles à identifier dans le cadre d'une ingénierie inversée. Cela contribue à complexifier la procédure d'ingénierie inversée et tend à rendre ce type de procédure non rentable au global.

Selon un mode de mise en oeuvre, la détermination du nombre d'incrémentations consécutives de la quantité constante comprend une comparaison entre des quantités incrémentées consécutivement sur les valeurs du pointeur d'instruction.

La comparaison des quantités incrémentées consécutivement sur les valeurs du pointeur permet de déterminer si la nouvelle quantité est égale ou différente par rapport à la quantité précédente. Cela permet de suivre une série d'incrémentations d'une quantité constante en vue de détecter ou non une incrémentation linéaire du pointeur d'instruction.

Selon un mode de mise en oeuvre, la détermination du nombre d'incrémentations consécutives d'une quantité constante comprend :
- une décrémentation d'une valeur d'un compteur, préalablement initialisée au seuil de détection, si deux quantités incrémentées consécutivement sur les valeurs du pointeur d'instruction sont égales ;
- une réinitialisation de la valeur du compteur au seuil de détection, si, au contraire, les deux quantités incrémentées consécutivement sur les valeurs du pointeur d'instruction sont différentes ; et
ledit signal de détection est généré lorsque la valeur du compteur est nulle.

L'utilisation de la décrémentation est plus robuste, par construction, qu'une incrémentation dans un cas où un registre contenant la valeur seuil de détection venait à être forcé à son point de départ lors d'une tentative de parade au procédé de détection.

En effet, un compteur décrémenté est initialisé à la valeur du seuil, qui n'est a priori pas connue par l'exécutant de l'ingénierie inversée, au contraire, un compteur incrémenté est apriori initialisé à une valeur nulle.

En conséquence, la procédure d'ingénierie inversée nécessitera des travaux supplémentaires en vue d'identifier le point de départ du compteur, qui contribuent à complexifier la mise en oeuvre de la procédure dans le but de la rendre non rentable au global.

Selon un mode de mise en oeuvre, un choix de la valeur du seuil de détection et une implémentation d'un code source sont effectués conjointement pour permettre des incrémentations consécutives d'une quantité constante des valeurs du pointeur d'instruction lors d'une exécution normale du code source par l'unité de traitement.

Ainsi, le choix conjoint du seuil de détection et de l'implémentation du code source permet d'assurer un bon compromis entre le niveau de sécurité attendu et la performance d'exécution du code source.

Prévoir conjointement l'implémentation du code source et la valeur du seuil de détection en fonction du code source permet d'éviter de générer un signal de détection lors du fonctionnement normal de l'unité de traitement.

En particulier, le code source doit se conformer à la valeur du seuil. Si une exécution normale du code source déclenche un signal de détection, alors des instructions de branchement par saut peuvent être introduites dans le code source afin d'interrompre sa linéarité.

Étant donné que le choix de la valeur du seuil de détection limite un nombre d'instructions qui peuvent être extraites pendant une procédure d'ingénierie inversée, il est avantageux de minimiser la valeur du seuil de détection, en adaptant éventuellement l'implémentation du code source à cet égard.

Selon un autre aspect, il est prévu un procédé de protection contre une extraction linéaire d'information comprenant le procédé de détection tel que défini précédemment, et comprenant en réponse à la génération du signal de détection, une étape forçant l'adresse mémoire d'une prochaine lecture par l'unité de traitement à des emplacements de mémoire dont les contenus sont non confidentiels.

Ainsi, une fois qu'une extraction linéaire de code est détectée alors l'unité de traitement est forcée à ne lire que des contenus non confidentiels. Cela permet de limiter les informations exploitables par l'exécutant de la procédure d'ingénierie inversée.

Selon un mode de mise en oeuvre, ladite étape comprend une réinitialisation du pointeur sur des valeurs du pointeur d'instruction prises avant la génération du signal de détection, ou une commande d'accès à des emplacements de mémoire dont les contenus d'origine sont non confidentiels.

Ainsi, commander un accès vers des emplacements de mémoire prévus pour contenir un contenu d'origine non confidentiel est une solution simple permettant de sécuriser l'unité de traitement en réponse à une détection d'une extraction linéaire de code.

Aux mêmes fins, il est également possible de réinitialiser le pointeur sur des valeurs prises par le pointeur d'instruction avant la génération du signal de détection. Cela permet de forcer l'unité de traitement à lire uniquement des contenus de la mémoire déjà lus avant la génération du signal de détection.

En effet, la valeur du pointeur d'instruction correspond à l'adresse mémoire en cours de lecture par l'unité de traitement. Les adresses de la mémoire n'ayant pas été lues avant la génération du signal de détection sont donc protégées.

De plus, la réinitialisation du pointeur d'instruction sur une valeur pointant vers une adresse de la mémoire permet de rendre le procédé de détection difficile à identifier étant donné que le processeur continue de fonctionner dans un mode d'extraction linéaire d'information qui pourrait laisser penser à un attaquant que l'extraction linéaire de code est encore en cours.

Par exemple, la réinitialisation du pointeur est faite à cet égard sur des valeurs comprises entre la première et la dernière valeur du pointeur d'instruction sur lesquelles ledit nombre d'incrémentations consécutives d'une quantité constante a été déterminé supérieur ou égal au seuil de détection.

Cela permet en effet de limiter les valeurs d'adresses lues par l'unité de traitement uniquement aux valeurs du pointeur d'instruction prises durant les incrémentations illégitimes.

Selon un autre aspect, il est proposé un circuit intégré comprenant une unité de traitement comportant un registre destiné à contenir une valeur d'un pointeur d'instruction, et un circuit de détection comprenant un moyen de surveillance configuré pour surveiller des valeurs du pointeur d'instruction, un moyen de comptage configuré pour déterminer un nombre d'incrémentations consécutives d'une quantité constante sur les valeurs du pointeur d'instruction, et un moyen de génération configuré pour générer un signal de détection si ledit nombre est supérieur ou égal à un seuil de détection.

Selon un mode de réalisation, le moyen de comptage est configuré pour comparer des quantités incrémentées consécutivement sur les valeurs du pointeur d'instruction.

Selon un mode de réalisation, le moyen de comptage est configuré pour décrémenter une valeur d'un compteur, destiné à être préalablement initialisé au seuil de détection, si deux quantités incrémentées consécutivement sur les valeurs du pointeur d'instruction sont égales, et pour réinitialiser la valeur du compteur au seuil de détection, sinon, et dans lequel le moyen de génération est configuré pour générer le signal de détection lorsque la valeur du compteur est nulle.

Selon un mode de réalisation, un choix de la valeur du seuil de détection et une implémentation d'un code source sont conjointement adaptés pour permettre des incrémentations consécutives d'une quantité constante des valeurs du pointeur d'instruction lors d'une exécution normale du code source par l'unité de traitement.

Selon un mode de réalisation, le circuit intégré comporte en outre un circuit de réaction configuré pour forcer l'adresse mémoire d'une prochaine lecture par l'unité de traitement à des emplacements de mémoire dont les contenus sont non confidentiels.

Selon un mode de réalisation, le circuit de réaction est configuré pour réinitialiser le pointeur sur des valeurs du pointeur d'instruction prises avant la génération du signal de détection ou pour commander un accès à des emplacements de mémoire dont les contenus d'origine sont non confidentiels.

Selon un mode de réalisation, le circuit de réaction est configuré pour réinitialiser le pointeur d'instruction sur des valeurs comprises entre la première et la dernière valeur du pointeur d'instruction sur lesquelles ledit nombre d'incrémentations consécutives d'une quantité constante a été déterminé supérieur ou égal au seuil de détection.

Selon un mode de réalisation, le circuit de détection et le circuit de réaction comportent des moyens logiques situés dans une région de circuit logique du type glue logique de l'unité de traitement.

D'autres avantages et caractéristiques de l'invention apparaîtront à l'examen de la description détaillée de modes de réalisation et de mise en oeuvre, nullement limitatifs, et des dessins annexés sur lesquels :
[Fig 1]
[Fig 2]

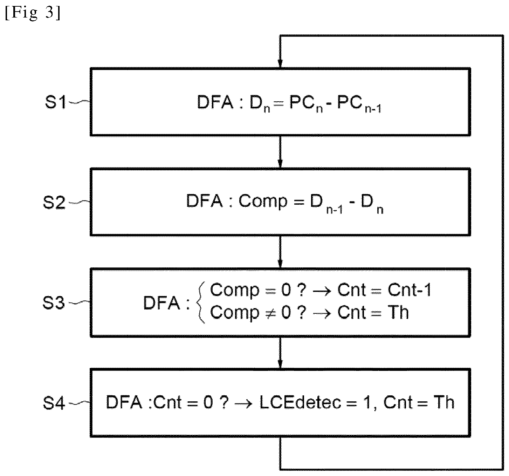

[Fig 3] illustrent des modes de réalisation et de mise en oeuvre de l'invention.

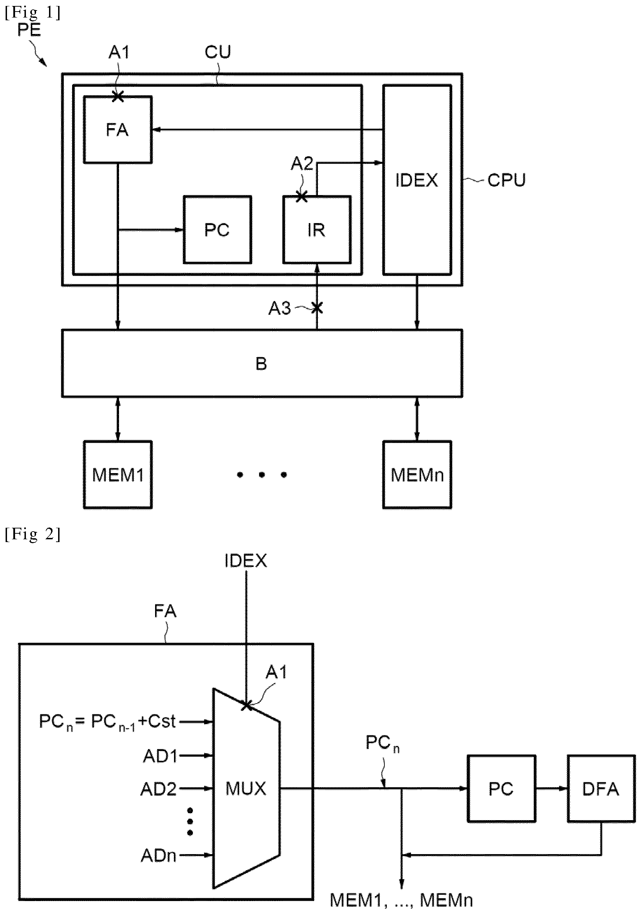

La figure 1 illustre schématiquement un microcontrôleur PE pendant une tentative de mise en oeuvre d'un procédé d'ingénierie inversée du type « Extraction Linéaire de Code », plus connu sous le terme anglais « Linear Code Extraction » ou encore sous une forme abrégée par l'acronyme « LCE ».

Le microcontrôleur représenté comprend une unité de traitement CPU, par exemple un processeur, connectée à au moins une mémoire MEM1, MEMn, par l'intermédiaire d'un bus de donnée B.

Par simplification, on fera référence à la mémoire pour désigner l'une des mémoires MEM1, ..., MEMn.

L'unité de traitement CPU comprend une unité de contrôle UC et un circuit de décodage et d'exécution d'instructions IDEX.

L'unité de contrôle UC comprend notamment un circuit d'extraction d'adresse FA, un registre contenant une valeur d'un pointeur d'instruction PC, et un registre d'instruction IR.

Lors du fonctionnement de l'unité de traitement CPU, le circuit d'extraction FA calcule une adresse à lire dans la mémoire MEM1,..., MEMn, et le registre du pointeur d'instruction PC stocke cette adresse.

Un code source stocké dans la mémoire à l'adresse pointée par le pointeur d'instruction PC est chargé dans le registre d'instruction IR.

Ensuite, le registre d'instruction IR transmet le code source au circuit IDEX qui décode le code source et exécute une instruction correspondante.

La tentative d'extraction linaire de code peut comprendre une attaque du circuit d'extraction d'adresse FA.

La tentative d'extraction linéaire de code consiste par exemple à forcer le circuit d'extraction d'adresse FA à incrémenter en boucle la valeur du pointeur d'instruction PC d'une quantité constante, de sorte que les adresses lues par l'unité de traitement CPU parcourent séquentiellement l'ensemble de la mémoire MEM1,..., MEMn.

En pratique, la tentative d'extraction linéaire de code peut comprendre un premier moyen de mise en oeuvre A1, utilisant par exemple des faisceaux d'ions focalisés « FIB » (pour « Focalised Ion Beam » usuellement en anglais) sur le circuit d'extraction d'adresses FA, permettant d'imposer des potentiels électriques et donc de changer des valeurs logiques.

Alternativement, les moyens de mise en oeuvre A1, peuvent comprendre des techniques d'injection de fautes permettant de forcer le circuit d'extraction d'adresse FA dans un mode d'incrémentation linéaire.

De telles techniques d'injection de fautes prévoient notamment de modifier physiquement le circuit (en ajoutant ou enlevant des connexions électriques) pour permettre de prendre le contrôle du circuit d'extraction d'adresse FA.

De plus, la tentative peut comprendre également l'utilisation d'un deuxième moyen de mise en oeuvre A2 et/ou de troisièmes moyens de mise en oeuvre A3, permettant d'extraire des valeurs logiques.

Les deuxième et/ou troisième moyens de mise en oeuvre A2, A3, utilisent des micros-sondes disposées sur un chemin sur lequel transite des données de la mémoire vers l'unité de traitement CPU, par exemple directement sur le registre d'instruction IR, ou sur le bus de données B reliant le registre d'instruction IR et la mémoire.

Il est donc classiquement possible de lire le code source extrait linéairement de la mémoire et stocké de manière transitoire dans le registre d'instruction IR.

La figure 2 illustre le circuit d'extraction d'adresse FA, le registre du pointeur d'instruction PC, ainsi qu'un circuit de détection DFA permettant de détecter une incrémentation linéaire du pointeur d'instruction PC du microcontrôleur PE, décrit en relation avec la figure 1.

Le circuit de détection DFA est notamment configuré pour signaler une tentative d'extraction linaire de code, « LCE », telle que décrite en référence à la figure 1.

Le premier moyen de mise en oeuvre A1 de la tentative d'extraction comprend notamment de forcer un sélecteur d'un multiplexeur MUX contenu dans le circuit d'extraction d'adresse FA.

Le premier moyen de mise en oeuvre A1 force le sélecteur du multiplexeur MUX à produire en sortie du circuit d'extraction FA une adresse obtenue par une addition d'une quantité constante Cst à une valeur précédente PCₙ₋₁ du pointeur d'instruction PC. Ce forçage du sélecteur est réalisé au détriment d'autres adresses AD1, AD2,..., ADn pouvant théoriquement être également sélectionnées et produites en sortie du multiplexeur MUX lors d'un fonctionnement normal du microcontrôleur PE.

On entend par fonctionnement normal du microcontrôleur PE le fonctionnement pour lequel il a été conçu, par exemple tel que spécifié dans un manuel d'utilisation constructeur (communément appelée « datasheet » en anglais).

Dans le cadre du procédé de détection d'extraction linéaire d'information, on peut considérer qu'un fonctionnement normal correspond à une situation dans laquelle le microcontrôleur ne subit pas une tentative d'extraction linéaire de code.

L'adresse produite en sortie du multiplexeur MUX du circuit d'extraction d'adresse FA est ensuite stockée dans le registre du pointeur d'instruction PC.

Pour mettre en oeuvre la détection de la tentative d'extraction linéaire de code, le circuit de détection DFA comprend un moyen de surveillance permettant notamment de lire les valeurs PCₙ, PCₙ₋₁ successives stockées dans le registre du pointeur d'instruction PC. Pour cela le circuit de détection DFA est connecté au registre du pointeur d'instruction PC.

De plus, le circuit de détection DFA comprend également un moyen de comptage configuré pour déterminer un nombre d'incrémentations consécutives de la quantité constante Cst sur les valeurs PCₙ, PCₙ₋₁ du pointeur d'instruction. À cette fin, le moyen de comptage peut par exemple comprendre un compteur dont la valeur courante est représentative du nombre d'incrémentations consécutives de la quantité constante Cst.

La tentative d'extraction linaire est détectée par exemple lorsque la valeur du compteur indique un nombre d'incrémentations consécutives de la quantité constante Cst égal ou supérieur au seuil de détection et un signal de détection est généré en conséquence.

Le circuit de détection DFA comprend à cet égard un moyen de génération configuré pour émettre un signal de détection si le nombre d'incrémentations de la quantité constante Cst est supérieur ou égal au seuil de détection.

Par ailleurs, le choix de la valeur du seuil de détection peut être prévu conjointement avec une implémentation particulière d'un code source contenu dans la mémoire.

En particulier, le choix de la valeur du seuil de détection et l'implémentation du code source peuvent être déterminés pour permettre un nombre « normal » d'incrémentations d'une quantité constante pouvant être exécutées consécutivement sans déclencher le signal de détection, lors de l'exécution du code source par l'unité de traitement.

Par exemple, il peut être prévu durant l'implémentation du code source d'introduire des instructions de branchement par saut pour s'adapter au seuil de détection choisi, de sorte à diminuer le nombre normal d'incrémentations d'une quantité constante provoquée par l'exécution du code source par l'unité de traitement.

Le nombre normal d'incrémentations d'une quantité constante peut être obtenu automatiquement par simulation de l'exécution du code source par l'unité de traitement CPU, ou bien empiriquement.

Les incrémentations normales d'une quantité constante sont provoquées par une exécution régulière d'une instruction de branchement incrémental contenue dans le code source par l'unité de traitement CPU.

On entend par « une instruction de branchement incrémental » une instruction utilisant un mode d'adressage dans lequel une prochaine adresse à lire par l'unité de traitement est définie par rapport à l'adresse en cours de lecture, typiquement en spécifiant une quantité à incrémenter par rapport à l'adresse en cours de lecture.

En d'autres termes, une instruction de branchement incrémental entraine une lecture séquentielle des adresses de la mémoire, c'est-à-dire l'une après l'autre dans l'ordre croissant des adresses de la mémoire.

Les instructions de branchement incrémental s'opposent aux instructions de branchement par saut provoquant un saut vers une adresse mémoire indépendante de l'adresse courante du pointeur d'instruction ou de la dernière adresse lue par l'unité de traitement.

Des instructions de branchement par saut sont par exemple des instructions du langage assembleur telles que des instructions de saut, d'appel de procédure, et de retour après une procédure (respectivement appelés usuellement en anglais « JUMP », « CALL » et « RETURN »).

Avantageusement, dans le procédé de détection d'extraction linéaire d'information, l'exécution par l'unité de traitement CPU d'une instruction de branchement par saut entraine automatiquement une réinitialisation des moyens de comptage.

En effet, une instruction de branchement par saut entraine une rupture de la lecture linéaire des adresses de la mémoire, et donc un branchement par saut est représentatif d'un fonctionnement qui n'est pas forcé dans une extraction linéaire de code.

Par ailleurs, il est avantageusement prévu une réaction en réponse à la détection de la tentative d'extraction linéaire de code, de façon à protéger le contenu de la mémoire n'ayant pas encore été lu lors de la tentative.

Un circuit de réaction, par exemple inclus dans le circuit de détection DFA, est configuré pour réinitialiser le pointeur d'instruction PC sur des valeurs d'adresse de la mémoire MEM1, ..., MEMn, déjà lues avant la détection de la tentative.

Par exemple, la réinitialisation des valeurs du pointeur peut comprendre une mise en oeuvre d'une boucle infinie de valeurs comprises entre la première et la dernière valeur prise par le pointeur d'instruction durant la tentative d'extraction, c'est-à-dire la première et la dernière valeur prise par le pointeur d'instruction PC lors des incrémentations de la quantité constante Cst ayant conduit à la génération du signal de détection.

Par ailleurs, le circuit de détection DFA et le circuit de réaction peuvent par exemple être situés dans une région de l'unité de traitement CPU.

En particulier, il est avantageux que les circuits de détection et de réaction soient dans une région du type « glue logique », plus communément connue sous le terme anglais « glue logic ». En effet, il existe des techniques connues permettant de dissimuler un circuit logique dans une telle région.

Ainsi, placer le circuit de détection DFA parmi des éléments d'une région du type glue logique a notamment pour avantage de rendre difficile une corruption du circuit de détection DFA.

La figure 3 illustre un exemple d'étapes de fonctionnement mises en oeuvre par le circuit de détection DFA décrit en référence à la figure 2.

Une première étape S1 comprend une surveillance des valeurs consécutives PCₙ, PCₙ₋₁, du pointeur d'instruction PC, à chaque nouvelle valeur stockée dans le registre du pointeur d'instruction PC. En particulier, la première étape S1 comprend à chaque nouvelle valeur stockée, un calcul de la quantité incrémentée Dₙ correspondant à la différence entre les valeurs consécutives PCₙ, PCₙ₋₁ du pointeur d'instruction PC.

Une deuxième étape S2 comprend une comparaison Comp des quantités incrémentées consécutivement Dₙ, Dₙ₋₁ sur les valeurs du pointeur d'instruction PC, de sorte à déterminer, à chaque incrémentation, si les deux quantités incrémentées consécutivement Dₙ, Dₙ₋₁ sont égales ou différentes. La comparaison Comp permet de déterminer si les quantités incrémentées successivement font partie d'une série d'incrémentations de la quantité constante.

Une troisième étape S3 comprend deux actions différentes selon le résultat de la comparaison Comp de l'étape précédente S2.

D'une part, si les deux quantités incrémentées consécutivement Dₙ, Dₙ₋₁ sont égales, alors la troisième étape S3 comprend une décrémentation d'une valeur d'un compteur Cnt, préalablement initialisé au seuil de détection Th.

Alternativement, il est bien entendu possible d'incrémenter le compteur Cnt jusqu'à la valeur du seuil de détection Th, dans ce cas la valeur du compteur Cnt est préalablement initialisée à zéro.

D'autre part, si au contraire, les deux quantités incrémentées consécutivement Dₙ, Dₙ₋₁ sur les valeurs PCₙ, PCₙ₋₁ du pointeur d'instruction sont différentes, alors la troisième étape S3 comprend une réinitialisation de la valeur du compteur au seuil de détection Th.

Une quatrième étape S4 comprend de lire la valeur du compteur Cnt.

Si la valeur du compteur Cnt est comprise entre la valeur zéro et le seuil de détection Th, alors le procédé revient à la première étape S1 en attendant qu'une nouvelle valeur du pointeur d'instruction PC soit stockée dans le registre correspondant.

Si la valeur du compteur Cnt est égale à zéro, dans le cas où le compteur est décrémenté, alors la quatrième étape S4 comprend une génération du signal de détection LCEdetec dans laquelle une valeur de signal de détection LCEdetec passe par exemple de la valeur logique 0 à la valeur logique 1.

Alternativement, si la valeur du compteur Cnt est égale au seuil de détection Th, dans le cas où le compteur est incrémenté, alors la quatrième étape S4 comprend une génération du signal de détection LCEdetec dans laquelle une valeur de signal de détection LCEdetec passe par exemple de la valeur logique 0 à la valeur logique 1.

Dans les deux cas, lorsque le signal de détection LCEdetec est généré le compteur Cnt est réinitialisé.

En alternative, le décompte (ou le compte) du compteur Cnt peut être effectué dans une plage de valeurs comprises entre deux bornes décalées arbitrairement du point zéro.

En effet, une valeur de décalage non nulle peut avantageusement être choisie de sorte à décaler les deux bornes du compteur Cnt. Cela permet que ni le point de départ ni le point d'arrivée du compteur Cnt ne puissent être connus par avance.

Par exemple, on peut choisir que la borne haute de la plage soit égale au seuil de détection additionnée à une valeur de décalage, et que la borne basse de la plage soit égale à la valeur de décalage. Dans cet exemple, le compteur est décrémenté de la borne haute à la borne basse, ou incrémenté de la borne basse à la borne haute.

En outre, dans cette alternative, il peut également être prévu une génération du signal de détection LCEdetec si la valeur du compteur Cnt n'est pas comprise entre la borne basse et la borne haute. Une telle génération permet de contrecarrer une tentative de forçage des valeurs du compteur Cnt au-delà des deux bornes.

Là encore, cela introduit un travail supplémentaire pour effectuer une procédure d'ingénierie inversée et contribue à complexifier ladite procédure, dans le but de la rendre non rentable au global.

## Revendications

1. Procédé de détection d'extraction linéaire d'information dans une unité de traitement (CPU) utilisant un pointeur d'instruction (PC), le procédé comprenant une surveillance des valeurs (PCn, PCn-1) du pointeur d'instruction, une détermination d'un nombre d'incrémentations consécutives d'une quantité constante sur les valeurs du pointeur d'instruction, et une génération d'un signal de détection (LCEdetec) si ledit nombre est supérieur ou égal à un seuil de détection (Th).

2. Procédé selon la revendication 1, dans lequel la détermination du nombre d'incrémentations consécutives de la quantité constante comprend une comparaison entre des quantités incrémentées consécutivement (Dn, Dn-1) sur les valeurs (PCn, PCn-1) du pointeur d'instruction (PC).

3. Procédé selon la revendication 1 ou 2, dans lequel la détermination du nombre d'incrémentations consécutives d'une quantité constante comprend :
- une décrémentation d'une valeur d'un compteur (Cnt), préalablement initialisée au seuil de détection (Th), si deux quantités incrémentées consécutivement (Dn, Dn-1) sur les valeurs (PCn, PCn-1) du pointeur d'instruction (PC) sont égales ;
- une réinitialisation de la valeur du compteur au seuil de détection, si, au contraire, les deux quantités incrémentées consécutivement (Dn, Dn-1) sur les valeurs (PCn, PCn-1) du pointeur d'instruction (PC) sont différentes ; et
dans lequel ledit signal de détection est généré lorsque la valeur du compteur est nulle.

4. Procédé selon l'une des revendications précédentes, dans lequel un choix de la valeur du seuil de détection (Th) et une implémentation d'un code source sont effectués conjointement pour permettre des incrémentations consécutives d'une quantité constante des valeurs (PCn, PCn-1) du pointeur d'instruction (PC) lors d'une exécution normale du code source par l'unité de traitement (CPU).

5. Procédé de protection contre une extraction linéaire d'information comprenant le procédé de détection selon l'une des revendications 1 à 4, et comprenant en réponse à la génération du signal de détection (LCEdetec), une étape forçant l'adresse mémoire d'une prochaine lecture par l'unité de traitement (CPU) à des emplacements de mémoire dont les contenus sont non confidentiels.

6. Procédé de protection selon la revendication 5, dans lequel ladite étape comprend une réinitialisation du pointeur (PC) sur des valeurs du pointeur d'instruction prises avant la génération du signal de détection (LCEdetec), ou une commande d'accès à des emplacements mémoire dont les contenus d'origine sont non confidentiels.

7. Procédé de protection selon la revendication 6, dans lequel la réinitialisation du pointeur (PC) est réalisée sur des valeurs comprises entre la première et la dernière valeur du pointeur d'instruction sur lesquelles ledit nombre d'incrémentations consécutives d'une quantité constante a été déterminé supérieur ou égal au seuil de détection (Th).

8. Circuit intégré comprenant une unité de traitement (CPU) comportant un registre destiné à contenir une valeur d'un pointeur d'instruction (PC), et un circuit de détection (DFA) comprenant un moyen de surveillance configuré pour surveiller des valeurs (PCn, PCn-1) du pointeur d'instruction, un moyen de comptage configuré pour déterminer un nombre d'incrémentations consécutives d'une quantité constante sur les valeurs du pointeur d'instruction, et un moyen de génération configuré pour générer un signal de détection (LCEdetec) si ledit nombre est supérieur ou égal à un seuil de détection (Th).

9. Circuit intégré selon la revendication 8, dans lequel le moyen de comptage est configuré pour comparer des quantités incrémentées consécutivement (Dn, Dn-1) sur les valeurs (PCn, PCn-1) du pointeur d'instruction (PC).

10. Circuit intégré selon l'une des revendications 8 ou 9, dans lequel le moyen de comptage est configuré pour décrémenter une valeur d'un compteur (Cnt), destiné à être préalablement initialisé au seuil de détection (Th), si deux quantités incrémentées consécutivement (Dn, Dn-1) sur les valeurs (PCn, PCn-1) du pointeur d'instruction (PC) sont égales, et pour réinitialiser la valeur du compteur au seuil de détection, sinon, et dans lequel le moyen de génération est configuré pour générer le signal de détection (LCEdetec) lorsque la valeur du compteur est nulle.

11. Circuit intégré selon l'une des revendications 8 à 10, dans lequel un choix de la valeur du seuil de détection (Th) et une implémentation d'un code source sont conjointement adaptés pour permettre des incrémentations consécutives d'une quantité constante des valeurs du pointeur d'instruction (PC) lors d'une exécution normale du code source par l'unité de traitement (CPU).

12. Circuit intégré selon l'une des revendications 8 à 11, comportant en outre un circuit de réaction configuré pour forcer l'adresse mémoire d'une prochaine lecture par l'unité de traitement (CPU) à des emplacements de mémoire dont les contenus sont non-confidentiels.

13. Circuit intégré selon la revendication 12, dans lequel le circuit de réaction est configuré pour réinitialiser le pointeur (PC) sur des valeurs du pointeur d'instruction prises avant la génération du signal de détection (LCEdetec) ou pour commander un accès à des emplacements mémoire dont les contenus d'origine sont non-confidentiels.

14. Circuit intégré selon la revendication 13, dans lequel le circuit de réaction est configuré en outre pour réinitialiser le pointeur d'instruction (PC) sur des valeurs comprises entre la première et la dernière valeur du pointeur d'instruction sur lesquelles ledit nombre d'incrémentations consécutives d'une quantité constante a été déterminé supérieur ou égal au seuil de détection (Th).

15. Circuit intégré selon l'une des revendications 8 à 14, dans lequel le circuit de détection (DFA) et le circuit de réaction comportent des moyens logiques situés dans une région de circuit logique du type glue logique de l'unité de traitement (CPU).

## Patentansprüche

1. Verfahren zum Erkennen von linearer Informationsextraktion in einer Verarbeitungseinheit (CPU) unter Verwendung eines Befehlszeigers (PC), wobei das Verfahren eine Überwachung der Werte (PCn, PCn-1) des Befehlszeigers, eine Bestimmung einer Anzahl von aufeinanderfolgenden Inkrementen einer konstanten Größe auf den Werten des Befehlszeigers und eine Erzeugung eines Erkennungssignals (LCEdetec) umfasst, wenn die Anzahl größer oder gleich einem Erkennungsschwellenwert (Th) ist.

2. Verfahren nach Anspruch 1, wobei die Bestimmung der Anzahl aufeinanderfolgender Inkremente der konstanten Menge einen Vergleich zwischen aufeinanderfolgenden inkrementierten Mengen (Dn, Dn-1) mit den Werten (PCn, PCn-1) des Befehlszeigers (PC) umfasst.

3. Verfahren nach Anspruch 1 oder 2, wobei die Bestimmung der Anzahl der aufeinanderfolgenden Inkremente einer konstanten Menge Folgendes umfasst:
- eine Dekrementierung eines Wertes eines Zählers (Cnt), der zuvor auf die Erkennungsschwelle (Th) initialisiert wurde, wenn zwei aufeinanderfolgende inkrementelle Werte (Dn, Dn-1) auf den Werten (PCn, PCn-1) des Befehlszeigers (PC) gleich sind;
- ein Zurücksetzen des Wertes des Zählers auf die Erkennungsschwelle, wenn stattdessen die beiden aufeinanderfolgenden inkrementierten Mengen (Dn, Dn-1) auf den Werten (PCn, PCn-1) des Befehlszeigers (PC) unterschiedlich sind; und
wobei das Erkennungssignal erzeugt wird, wenn der Zählerwert Null ist.

4. Verfahren nach einem der vorstehenden Ansprüche, wobei eine Auswahl des Wertes der Erkennungsschwelle (Th) und eine Implementierung eines Quellcodes gemeinsam durchgeführt werden, um aufeinanderfolgende Inkremente einer konstanten Menge der Werte (PCn, PCn-1) des Befehlszeigers (PC) bei einer normalen Ausführung des Quellcodes durch die Verarbeitungseinheit (CPU) zu ermöglichen.

5. Verfahren zum Schutz vor linearem Informationsabruf, umfassend das Erkennungssignal nach einem der Ansprüche 1 bis 4, und umfassend als Reaktion auf die Erzeugung des Erkennungssignals (LCEdetec) einen Schritt, der die Speicheradresse eines nächsten Lesevorgangs durch die Verarbeitungseinheit (CPU) an Speicherplätzen erzwingt, deren Inhalte nicht vertraulich sind.

6. Verfahren zum Schutz nach Anspruch 5, wobei dieser Schritt ein Zurücksetzen des Zeigers (PC) auf Werte des Befehlszeigers umfasst, die vor der Erzeugung des Erkennungssignals (LCEdetec) genommen wurden, oder einen Befehl zum Zugriff auf Speicherplätze, deren ursprünglicher Inhalt nicht vertraulich ist.

7. Verfahren zum Schutz nach Anspruch 6, wobei das Zurücksetzen des Zeigers (PC) auf Werte zwischen dem ersten und dem letzten Wert des Befehlszeigers durchgeführt wird, bei denen die Anzahl der aufeinanderfolgenden Inkremente einer konstanten Menge größer oder gleich der Erkennungsschwelle (Th) bestimmt wurde.

8. Integrierte Schaltung, umfassend eine Verarbeitungseinheit (CPU) mit einem Register zum Halten eines Wertes eines Befehlszeigers (PC), und eine Erkennungsschaltung (DFA), umfassend ein Überwachungsmittel, das konfiguriert ist, um Werte (PCn, PCn-1) des Befehlszeigers zu überwachen, ein Zählmittel, das konfiguriert ist, um eine Anzahl von aufeinanderfolgenden Inkrementen einer konstanten Menge über die Werte des Befehlszeigers zu bestimmen, und ein Erzeugungsmittel, das konfiguriert ist, um ein Erkennungssignal (LCEdetec) zu erzeugen, wenn die Anzahl größer oder gleich einer Erkennungsschwelle (Th) ist.

9. Integrierte Schaltung nach Anspruch 8, wobei das Zählmittel so konfiguriert ist, dass es aufeinanderfolgende inkrementelle Mengen (Dn, Dn-1) mit den Werten (PCn, PCn-1) des Befehlszeigers (PC) vergleicht.

10. Integrierte Schaltung nach einem der Ansprüche 8 oder 9, wobei das Zählmittel konfiguriert ist, um einen Wert eines Zählers (Cnt), der zuvor auf die Erkennungsschwelle (Th) initialisiert werden soll, zu dekrementieren, wenn zwei aufeinanderfolgende inkrementierte Mengen (Dn, Dn-1) der Werte (PCn, PCn-1) des Befehlszeigers (PC) gleich sind, und um den Wert des Zählers auf die Erkennungsschwelle zurückzusetzen, wenn nicht, und wobei das Erzeugungsmittel konfiguriert ist, um das Erkennungssignal (LCEdetec) zu erzeugen, wenn der Wert des Zählers Null ist.

11. Integrierte Schaltung nach einem der Ansprüche 8 bis 10, wobei eine Auswahl des Wertes der Erkennungsschwelle (Th) und eine Implementierung eines Quellcodes gemeinsam geeignet sind, um aufeinanderfolgende Inkremente einer konstanten Menge der Werte des Befehlszeigers (PC) während einer normalen Ausführung des Quellcodes durch die Verarbeitungseinheit (CPU) zu ermöglichen.

12. Integrierte Schaltung nach einem der Ansprüche 8 bis 11, die ferner eine Rückkopplungsschaltung umfasst, die so konfiguriert ist, dass sie die Speicheradresse eines nächsten Lesevorgangs durch die Verarbeitungseinheit (CPU) an Speicherplätzen erzwingt, deren Inhalte nicht vertraulich sind.

13. Integrierte Schaltung nach Anspruch 12, wobei die Rückkopplungsschaltung so konfiguriert ist, dass sie den Zeiger (PC) auf Werte des Befehlszeigers zurücksetzt, die vor der Erzeugung des Erkennungssignals (LCEdetec) genommen wurden, oder den Zugriff auf Speicherplätze steuert, deren ursprünglicher Inhalt nicht vertraulich ist.

14. Integrierte Schaltung nach Anspruch 13, wobei die Rückkopplungsschaltung ferner so konfiguriert ist, dass sie den Befehlszeiger (PC) auf Werte zwischen dem ersten und dem letzten Wert des Befehlszeigers zurücksetzt, bei denen die Anzahl der aufeinanderfolgenden Inkremente einer konstanten Menge größer oder gleich der Erkennungsschwelle (Th) bestimmt wurde.

15. Integrierte Schaltung nach einem der Ansprüche 8 bis 14, wobei die Erkennungsschaltung (DFA) und die Rückkopplungsschaltung logische Mittel umfassen, die sich in einem logischen Schaltungsbereich vom Typ Logikleitfaden der Verarbeitungseinheit (CPU) befinden.

## Claims

1. A method for detecting linear extraction of information in a processing unit (CPU) using an instruction pointer (PC), the method comprising monitoring the values (PCn, PCn-1) of the instruction pointer, a determination of a number of consecutive increments of a constant quantity on the values of the instruction pointer, and a generation of a detection signal (LCEdetec) if said number is greater than or equal to a detection threshold (Th).

2. The method according to claim 1, wherein the determination of the number of consecutive increments of the constant quantity comprises a comparison between consecutively incremented quantities (Dn, Dn-1) on the values (PCn, PCn-1) of the instruction pointer (PC).

3. The method according to claim 1 or 2, wherein determining the number of consecutive increments of a constant quantity comprises:
- decrementing a value of a counter (Cnt), previously set to the detection threshold (Th), if two quantities incremented consecutively (Dn, Dn-1) on the values (PCn, PCn-1) of the instruction pointer (PC) are equal;
- resetting the value of the counter to the detection threshold, if, on the contrary, the two quantities incremented consecutively (Dn, Dn-1) on the values (PCn, PCn-1) of the instruction pointer (PC) are different; and wherein said detection signal is generated when the counter value is zero.

4. The method according to one of the preceding claims, wherein a choice of the value of the detection threshold (Th) and an implementation of a source code are carried out jointly to allow consecutive increments of a constant quantity of the values (PCn, PCn-1) of the instruction pointer (PC) during normal execution of the source code by the processing unit (CPU).

5. A method for protection against linear extraction of information comprising the detection method according to one of claims 1 to 4, and comprising in response to the generation of the detection signal (LCEdetec), a step forcing the memory address of a next reading by the processing unit (CPU) at memory locations whose contents are non-confidential.

6. The protection method according to claim 5, wherein said step comprises a reset of the pointer (PC) on values of the instruction pointer taken before the generation of the detection signal (LCEdetec), or an access control at memory locations whose original contents are non-confidential.

7. The protection method according to claim 6, wherein the resetting of the pointer (PC) is carried out on values comprised between the first and the last value of the instruction pointer on which said number of consecutive increments of a constant quantity was determined greater than or equal to the detection threshold (Th).

8. An integrated circuit comprising a processing unit (CPU) including a register intended to contain a value of an instruction pointer (PC), and a detection circuit (DFA) comprising monitoring means configured to monitor values (PCn, PCn-1) of the instruction pointer, counting means configured to determine a number of consecutive increments of a constant quantity on the values of the instruction pointer, and generation means configured to generate a detection signal (LCEdetec) if said number is greater than or equal to a detection threshold (Th).

9. The integrated circuit according to claim 8, wherein the counting means is configured to compare consecutively incremented quantities (Dn, Dn-1) on the values (PCn, PCn-1) of the instruction pointer (PC).

10. The integrated circuit according to one of claims 8 or 9, wherein the counting means is configured to decrement a value of a counter (Cnt), intended to be previously set to the detection threshold (Th), if two quantities incremented consecutively (Dn, Dn-1) on the values (PCn, PCn-1) of the instruction pointer (PC) are equal, and to reset the value of the counter to the detection threshold, otherwise, and wherein the generation means is configured to generate the detection signal (LCEdetec) when the counter value is zero.

11. The integrated circuit according to one of claims 8 to 10, wherein a choice of the value of the detection threshold (Th) and an implementation of a source code are jointly adapted to allow consecutive increments of a constant quantity of the values of the instruction pointer (PC) during normal execution of the source code by the processing unit (CPU).

12. The integrated circuit according to one of claims 8 to 11, further including a feedback circuit configured to force the memory address of a next reading by the processing unit (CPU) at memory locations whose contents are non-confidential.

13. The integrated circuit according to claim 12, wherein the feedback circuit is configured to reset the pointer (PC) to values of the instruction pointer taken before the generation of the detection signal (LCEdetec) or to control access to memory locations whose original contents are non-confidential.

14. The integrated circuit according to claim 13, wherein the feedback circuit is further configured to reset the instruction pointer (PC) to values comprised between the first and the last value of the instruction pointer on which said number of consecutive increments of a constant quantity were determined to be greater than or equal to the detection threshold (Th).

15. The integrated circuit according to one of claims 8 to 14, wherein the detection circuit (DFA) and the feedback circuit include logic means located in a logic circuit region of the logic glue type of the processing unit (CPU).
